# EUROPEAN PATENT APPLICATION

(11) **EP 2 236 584 A1**
(43) Date of publication of application: **06.10.2010**
(21) Application number: 08860627.2
(22) Date of filing: 08.12.2008
(51) Int. Cl.: C10L 1/02, C10G 3/00, C10L 1/08, C10L 1/19, C11C 3/10

(54) **DIESEL FUEL COMPOSITION**

(30) Priority: 12.12.2007 JP 2007321386
(71) Applicant: Honda Motor Co., Ltd., Minato-ku Tokyo 107-8556 (JP)
(72) Inventor: OSAWA, Mitsuru, Wako-shi Saitama 351-0193 (JP); EBINUMA, Yuta, Wako-shi Saitama 351-0193 (JP); MIZUGUCHI, Takayuki, Wako-shi Saitama 351-0193 (JP); SASAKI, Shoji, Wako-shi Saitama 351-0193 (JP); TAKAKI, Yusaku, Wako-shi Saitama 351-0193 (JP)
(74) Representative: Dey, Michael
(86) International application number: PCT/JP2008/072252
(87) International publication number: WO 2009/075249

(57) **Abstract**

Disclosed is a diesel fuel composition obtained by mixing a diesel oil and a biodiesel oil, which can be used in popular diesel cars. The diesel fuel composition enables remarkable reduction in sludge formation. Specifically disclosed is a diesel fuel composition obtained by mixing a diesel oil containing an aromatic component and a biodiesel oil. The diesel fuel composition is **characterized in that** the biodiesel oil content in the diesel fuel composition is 10-50% by volume, and the aromatic component content in the diesel oil is not less than 30% by volume.

## Description

### TECHNICAL FIELD

The present invention relates to a diesel fuel composition made by mixing diesel fuel oil and biodiesel, and in particular relates to a diesel fuel composition that can be used in diesel vehicles in widespread use, and can greatly reduce sludge formation.

### BACKGROUND ART

In recent years, biodiesel has gained attention as a fuel for diesel engines from the view point of a measure to deal with global warming. Biodiesel is a fuel having a fatty acid methyl ester (Fatty Acid Methyl Ester: FAME) component obtained by methyl esterification of fats and oils derived from living things by way of various methods. Investigation into a diesel fuel composition made by adding a predetermined amount of such biodiesel into diesel fuel oil and mixing has been making process.

From the view point of carbon neutrality, a larger additive amount of biodiesel added into diesel fuel oil is preferred. However, if the additive amount of biodiesel exceeds a certain constant value, the amount of heat generation by the diesel engine will decrease, and it will not be possible to heat the diesel particulate filter (DPF) to high temperature. As a result, the regenerative ability of the DPF will decrease, and particulate matter (PM) will collect on the DPF and accumulate, resulting in it being difficult for exhaust gas itself to be emitted.

For example, high-concentration biodiesel fuel is considered unusable in common-rail type diesel engine systems. This is because, in addition to the phenomenon described above, the generation of injector deposits and combustion deposits, decline in rail pressure due to clogging of the fuel filter, and deterioration to fuel hoses made of resin occur easily, and thus come to be a hindrance in realization of safe operation of the vehicle. As a result, upon using biodiesel of a high concentration, it is presently necessary to make special allowances such as component replacement on the vehicle side.

Therefore, a diesel fuel composition has been sought that largely contains biodiesel within a range that can be used in diesel vehicles in widespread use without difficulty. However, at present, the additive amount of biodiesel added into diesel fuel oil is limited to no higher than 5% by volume, as general distribution fuel in the EU. High concentration enrichment of biodiesel is a cause of sludge formation along with oxidative degradation, which may induce clogging of the injectors, fuel filter, piping and the like, in addition to having a negative influence on vehicle performance.

In this way, for diesel fuel compositions composed of mixed diesel fuel oil, a characteristic improvement in the fuel composition has been sought in order to avoid various problems such as sludge generated due to different fuels being mixed. For example, a diesel fuel composition made by adding, in place of biodiesel, a catalytically cracked diesel fuel oil composed of specific required components to diesel fuel oil and mixing has been disclosed (e.g., refer to Patent Document 1). According to this technology, it is considered possible to reduce the generated amount of PM by raising the caloric amount during combustion and suppress the formation of sludge during storage, while simultaneously achieving effective utilization of catalytically cracked diesel fuel oil, which has been considered difficult to use conventionally.

In addition, for mixed diesel fuel oil made by adding biodiesel to diesel fuel oil and mixing, a technique of adding an antioxidant (BHT, etc.) has been disclosed (e.g., refer to Patent Document 2). According to this technique, it is made possible to provide a diesel fuel composition that can suppress swelling of rubber seals, which are fuel system components for internal combustion engines.

In addition, a fuel additive for improving the flow property of fuel oil derived from living things and minerals at lowered temperature conditions has been disclosed (e.g., refer to Patent Document 3). According to this additive, it is considered possible to improve the dispersibility of the paraffin component in fuel in particular.

Patent Document 1: Japanese Patent No. 3218785

Patent Document 2: Japanese Unexamined Patent Application Publication No. 2007-16089

Patent Document 3: Japanese Unexamined Patent Application Publication No. 2006-307222

### DISCLOSURE OF THE INVENTION

### Problems to be Solved by the Invention

However, even if the technology of Patent Document 1 is applied to a diesel fuel composition in which biodiesel is blended, formation of sludge could not be suppressed due to variation in the mechanism for sludge formation. In addition, in the technology of Patent Document 2, a large amount of additive becomes necessary for a sufficient sludge reduction effect to be exhibited. The use of additives such as antioxidants is also a primary factor in rising costs, and furthermore turns out to also be a primary factor in generation of deposits. In addition, Patent Document 3 does not disclose a counter-measure against an increase in sludge formation while at high temperature, and thus is merely a document that simply exemplifies a biodiesel mixed fuel oil.

The present invention was made by taking the above such issues into account, and an object thereof is to provide a diesel fuel composition, made by mixing diesel fuel oil and biodiesel, that can be used in diesel vehicles in widespread use and can greatly reduce formation of sludge.

### Means for Solving the Problems

The present inventors have diligently researched to solve the above-mentioned problems. As a result thereof, it was discovered that the formation of sludge can be greatly suppressed compared to conventionally by adjusting the composition of diesel fuel oil to have an additive amount of biodiesel added to the diesel fuel oil within a certain constant range, thereby arriving at completion of the present invention. More specifically, the present invention provides the following.

According to a first aspect, in a diesel fuel composition made by mixing diesel fuel oil containing an aromatic component with biodiesel, wherein a content percentage of the biodiesel in the diesel fuel composition is 10% by volume to 50% by volume, and wherein a content percentage of the aromatic component in the diesel fuel oil is at least 30% by volume.

Based on the research of the present applicants applying oxidation stability tests regulated by enforcement standards in Japan (law enforced regulations relating to quality guarantee of petroleum, etc. (Ordinance of the Ministry of Economy, Trade and Industry No. 3 2007)), it has been confirmed that the most sludge is formed in the case of the additive amount of biodiesel added to diesel fuel oil being 10% by volume to 50% by volume (the details thereof are described below). As a result, so long as the additive amount of biodiesel is within this range, although it is possible to be used in diesel vehicles in widespread use, there is no possibility at present to be actually used due to the formation of sludge.

In this respect, according to the diesel fuel composition as described in the first aspect, irrespective of the content of biodiesel being within the range of 10% by volume to 50% by volume, the formation of sludge can be suppressed by adjusting the composition of the diesel fuel oil. More specifically, according to the diesel fuel composition as described in the first aspect, by setting the content percentage of the aromatic component in the diesel fuel oil to be at least 30% by volume, it is possible to suppress the formation of sludge. This is considered to be due to the aromatic component contained in the diesel fuel composition having high solvency for sludge compared to paraffin and the like, and thus the solvency to sludge of the diesel fuel composition is raised by raising the content percentage of the aromatic component, resulting in it being possible to suppress sludge formation.

In addition, according to the diesel fuel composition as described in the first aspect, fuel oil containing aromatic components in a large amount can be used as the diesel fuel oil. For example, LCO (Light Cycle Oil), which contains aromatic components in a large amount and is in weak demand globally, can be effectively utilized.

According to a second aspect, in the diesel fuel composition as described in the first aspect, wherein the biodiesel is a biodiesel obtained by methyl esterification of vegetal oil having an iodine value of 50 to 200.

According to the research of the present applicants, sludge coming to be a problem in diesel fuel compositions made by mixing diesel fuel oil and biodiesel is considered to originate from oxidative degradation of unsaturated fatty acid methyl esters derived from biodiesel. In order words, it is considered that oxidative degradation substances having low solubility in the paraffin component such as alcohols, aldehydes, ketones and high viscosity oxides in which like degradation products have polymerized are generated, such as by cleavage of double bonds by oxidative degradation of unsaturated fatty acid methyl esters, resulting in sludge forming.

In this respect, the diesel fuel composition as described in the second aspect can markedly suppress formation of sludge relative to conventionally, even in the case blending biodiesel obtained by methyl esterification of vegetal oil having an iodine value of 50 to 200 and containing many double bonds, since the solubility of sludge can be adjusted by adjusting the composition of the diesel fuel oil.

According to a third aspect, in the diesel fuel composition as described in the second aspect, wherein the vegetal oil is at least one selected from the group consisting of linseed oil, safflower oil, high oleic safflower oil, soybean oil, sesame oil, corn oil, rapeseed oil, cottonseed oil, olive oil, palm oil, sunflower oil, and jatropha oil.

Although the at least one type of a vegetal oil selected from the group consisting of linseed oil, safflower oil, high oleic safflower oil, soybean oil, sesame oil, corn oil, rapeseed oil, cottonseed oil, olive oil, palm oil, sunflower oil, and jatropha oil is an exemplary vegetal oil having an iodine value within the range of 50 to 200, according to the diesel fuel composition as described in the third aspect, the formation of sludge can be markedly suppressed relative to conventionally, even in the case of blending biodiesel obtained by methyl esterification of these vegetal oils, since the solubility of sludge can be adjusted by adjusting the composition of the diesel fuel oil.

### Effects of the Invention

According to the present invention, it is possible to provide a diesel fuel composition, which is a diesel fuel composition made by mixing diesel fuel oil and biodiesel, that can be used in diesel vehicles in widespread use, and can greatly reduce sludge formation. Furthermore, it is possible to provide a diesel fuel composition that can avoid trouble occurring such as clogging of the fuel filter.

### BRIEF DESCRIPTION OF THE DRAWINGS

FIG. 1 is a graph showing concentrations of the aromatic component and the paraffin component in market diesel fuel oils;
FIG. 2 is a graph showing the molecular weight distribution of sludge formed from biodiesel;
FIG. 3 is a graph showing a relationship between the concentration of biodiesel and the amount of sludge formation;
FIG. 4 is a graph showing a relationship of the concentration of aromatic component and the concentration of sludge of the diesel fuel composition, when the concentration of biodiesel in the present example is 10% by volume;
FIG. 5 is a graph showing a relationship of the concentration of aromatic component and the concentration of sludge of the diesel fuel composition, when the concentration of biodiesel in the present example is 20% by volume;
FIG. 6 is a graph showing a relationship of the concentration of aromatic component and the concentration of sludge of the diesel fuel composition, when the concentration of biodiesel in the present example is 30% by volume;
FIG. 7 is a graph showing a relationship of the concentration of biodiesel and the concentration of sludge, when the concentration of cetane in an artificial diesel fuel oil is 100% by volume;
FIG. 8 is a graph showing a relationship of the concentration of biodiesel and the concentration of sludge, when the concentration of cetane in an artificial diesel fuel oil is 90% by volume; and
FIG. 9 is a graph showing a relationship of the concentration of biodiesel and the concentration of sludge, when the concentration of cetane in an artificial diesel fuel oil is 80% by volume.

### PREFERRED MODE FOR CARRYING OUT THE INVENTION

Herein, embodiments of the present invention will be explained in detail while referring to the drawings.

The diesel fuel composition of the present invention is characterized by being made by mixing diesel fuel oil and biodiesel, and having a content percentage of biodiesel in the diesel fuel composition in the range of 10% by volume to 50% by volume, and a content percentage of aromatic component in the diesel fuel oil of at least 30% by volume.

### Diesel Fuel Oil

In the present invention, diesel fuel oil containing an aromatic component mainly as well as a paraffin component, which is a saturated component, a naphthene (cycloparaffins) component, and the like, and having a content percentage of the aromatic component of at least 30% by volume is employed. Sludge formation can be suppressed by making the content percentage of the aromatic component to be at least 30% by volume. This is considered to be due to the aromatic component contained in the diesel fuel composition having high solvency for sludge compared to paraffin and the like, and thus the solvency to sludge of the diesel fuel composition is raised by raising the content percentage of the aromatic component, resulting in it being possible to suppress sludge formation. As a result, although the content percentage of biodiesel has heretofore been limited to no higher than 5% by volume, according to the present invention, sludge formation can be suppressed, so long as the content percentage of biodiesel is within the range of 10% to 50% by volume.

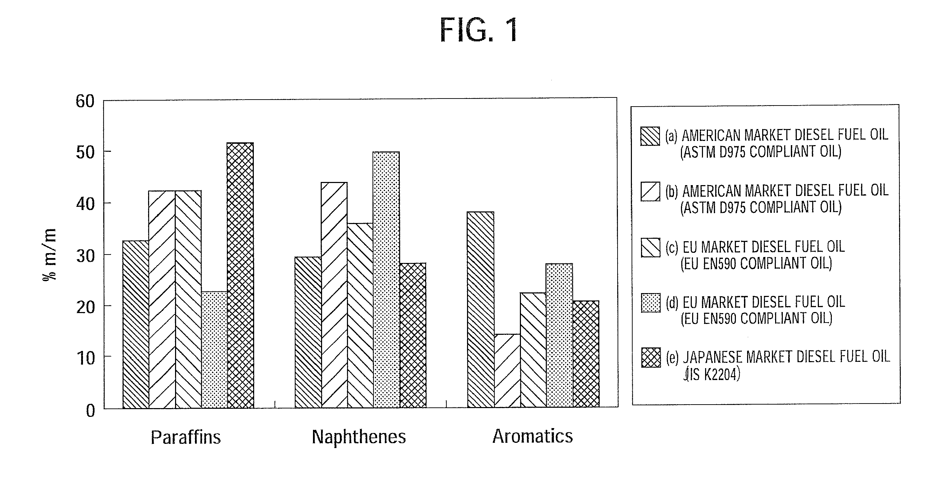

The results of examining the composition of commercially available diesel fuel oil are shown in FIG. 1. As shown in FIG. 1, normal diesel fuel oil is composed of an aromatic component, paraffin component, and naphthene component, and the content percentage of each of these components vary according to the production area, standards, etc. In the present invention, since diesel fuel oil containing at least 30% by volume of an aromatic component is employed, for example, among the market diesel fuel oils shown in FIG. 1, (a) American market diesel fuel oil can be employed. In addition, LCO (Light Cycle Oil), which contains aromatic components in a large amount and is in weak demand globally, can be employed, and thus effective utilization of resources is possible.

It should be noted that the content percentage of the aromatic component in the present invention indicates the volume percentage (% by volume) converted by content of the aromatic component measured based on the IP Standard Method 391/95 of The Institute of Petroleum (analysis method of aromatic hydrocarbons of middle distillates by high-performance liquid chromatography using refractive index detector) .

According to the diesel fuel composition of the present invention in which diesel fuel oil having a content percentage of aromatic component of at least 30% by volume is blended, since the added amount of biodiesel can be set to 10% by volume or higher, effective use of biodiesel is achieved. In addition, it is possible to avoid injector deposits, clogging of the fuel filter and deterioration of fuel hoses made from resin by limiting the added amount of biodiesel to no more than 50% by volume, thereby enabling safe operation of the vehicle.

In addition, in the present invention, it is preferable to use diesel fuel oil in which the total of content percentages of paraffin component and naphthene component is no more than 70% by volume. Sludge formation can be suppressed by setting the total of the percentages of paraffin component and naphthene component in the diesel fuel oil to be no more than 70% by volume. This is considered to be due to the paraffin component and the naphthene component in the diesel fuel composition having low solvency for sludge compared to the aromatic component, and thus raising the solvency for sludge of the diesel fuel composition by decreasing the content percentage of paraffin component and naphthene component enables sludge formation to be effectively suppressed.

### Biodiesel

Although FAME, which is composed of fats and oils derived from living things, is widely used as the biodiesel, FAME composed of vegetal oil having an iodine value of 50 to 200 among these, and particularly preferably composed of vegetal oil having an iodine value of 50 to 150, can be preferably used. Even in a case of biodiesel obtained by methyl esterification of vegetal oil with an iodine value of 50 to 200 and containing many double bonds, since the solubility of sludge can be adjusted by adjusting the composition of the diesel fuel oil, it is possible to markedly suppress sludge formation compared to conventionally. In particular, so long as being vegetal oil having an iodine value in the range of 50 to 150, a sufficient sludge suppression effect against the amount of sludge formed can be exhibited. Herein, although the oils indicated in Table 1 below are exemplified as the vegetal oil, for example, among these, linseed oil, safflower oil, high oleic safflower oil, soybean oil, sesame oil, corn oil, rapeseed oil, cottonseed oil, olive oil, palm oil, sunflower oil, and jatropha oil can be specifically exemplified as the vegetal oil having an iodine value of 50 to 200. Among these in particular, palm oil, soybean oil, rapeseed oil, sunflower oil, corn oil and jatropha oil can be preferably used due to excelling as source materials in the aspects of having iodine values falling into the range of 50 to 150, having production outputs that are high, having supply amounts that are stable, having negotiable prices that are low, having high yieldability, and the like.

**Table 1**

| | | | | | | | |
|---|---|---|---|---|---|---|---|
| (UNITS = % BY WEIGHT) | | | | | | | |

| | | LINSEED OIL | SAFFLOWER OIL | HIGH OLEIC SAFFLOWER OIL | SOYBEAN OIL | SESAME OIL | CORN OIL |
|---|---|---|---|---|---|---|---|
| C12:0 | LAURIC ACID | - | - | - | - | - | - |
| C14:0 | MYRIST1C ACID | - | - | - | - | - | - |
| C16:0 | PALMITIC ACID | 5.3 | 7.0 | 5.1 | 10.1 | 9.4 | 12.6 |
| C16:1 | PALMITOLEIC ACID | - | - | - | 0.1 | 0.1 | 0.8 |
| C18:0 | STEARIC ACID | 3.2 | 1.8 | 2.1 | 4.2 | 5.9 | 1.8 |
| C18:1 | OLEIC ACID | 20.2 | 12.6 | 75.7 | 23.7 | 40.9 | 30.0 |
| C18:2 | LINOLEIC ACID | 15.1 | 77.6 | 15.2 | 53.7 | 42.4 | 54.3 |
| C18:3 | LINOLENIC ACID | 56.2 | 0.4 | 0.3 | 7.5 | 0.3 | 0.5 |
| C20:0 | ARACHIC ACID | - | - | 0.5 | 0.3 | 0.7 | - |
| C20:1 | EICOSENOIC ACID | - | - | 0.3 | - | 0.2 | - |
| C22:0 | BEHENIC ACID | - | - | 0.4 | 0.3 | 0.1 | - |
| IODINE VALUE | | 180~195 | 135~150 | 80~100 | 115~140 | 105~130 | 100~130 |
| | | | | | | | |

| | | RAPESEED OIL | COTTONSEED OIL | OLIVE OIL OLIVE OIL | PALM OIL | SUNFLOWER OIL | JATROPHA OIL |
|---|---|---|---|---|---|---|---|
| C12:0 | LAURIC AC1D | - | - | - | 0.2 | - | - |
| C14:0 | MYRISTIC ACID | - | 0.9 | - | 1.1 | - | - |
| C16:0 | PALMITIC ACID | 4.4 | 23.4 | 12.8 | 44.0 | 4.3 | 14.1 |
| C16:1 | PALMITOLEIC ACID | 0.2 | 1.1 | 0.8 | 0.1 | - | - |
| C18:0 | STEARIC ACID | 2.2 | 1.9 | 3.0 | 4.5 | 3.6 | 7.9 |
| C18:1 | OLEIC ACID | 61.6 | 16.7 | 74.5 | 39.2 | 59.2 | 33.5 |
| C18:2 | LINOLEIC ACID | 19.8 | 56.0 | 7.3 | 10.1 | 31.1 | 43.5 |
| C18:3 | LINOLENIC ACID | 8.5 | - | 0.8 | 0.4 | 0.1 | - |
| C20:0 | ARACHIC ACID | 0.7 | - | 0.4 | 0.4 | 0.3 | - |
| C20:1 | EICOSENOIC ACID | 1.4 | - | - | - | 0.2 | - |
| C22:0 | BEHENIC ACID | 0.3 | - | - | - | 0.9 | - |
| IODINE VALUE | | 95~115 | 100~120 | 95~115 | 75∼95 | 50~56 | 70∼110 |

| | | | | | | | |
|---|---|---|---|---|---|---|---|
| 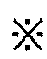 FOR THE NOTATION OF "Cm:n", m REPRESENTS THE CARBON NUMBER OF THE MAIN CHAIN AND n REPRESENTS THE NUMBER OF DOUBLE BONDS. FOR EXAMPLE, IN THE CASE OF "C8:0", THE CARBON NUMBER OF THE MAIN CHAIN IS 8 AND THE NUMBER OF DOUBLE BONDS IS 0. | | | | | | | |

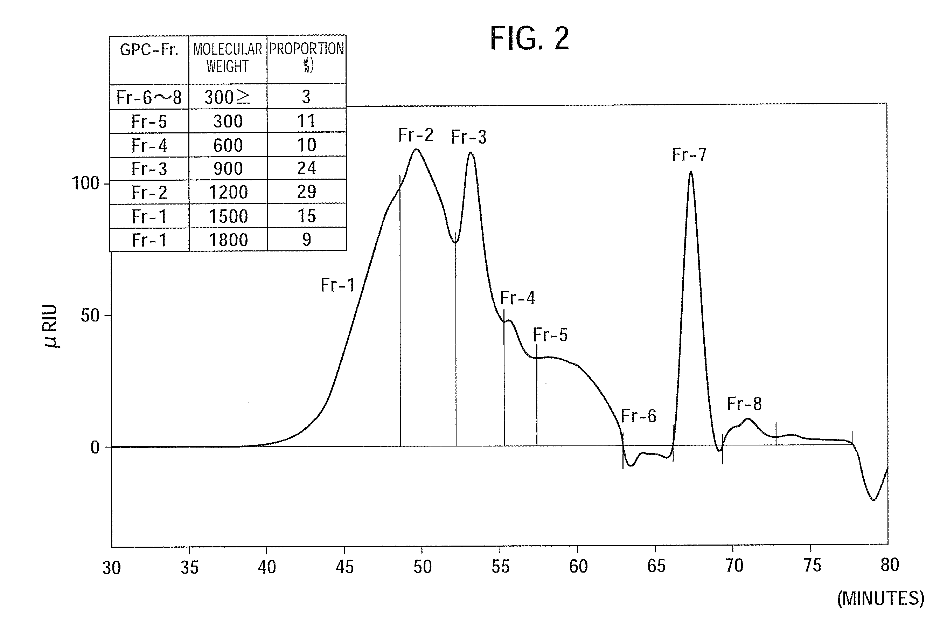

Biodiesel obtained by methyl esterification of vegetal oil containing double bonds has a property of deteriorating by oxidation. As shown in the chemical reaction formulas (I), (I') and (II) described below, biodiesel has a property whereby double bonds are cleaved by oxidation, and alcohols, aldehydes, ketones, high viscosity oxides of polymerized like degradation products, and the like, which are insoluble in paraffin, are generated. In other words, (I) and (I') are degradation reactions and (II) is a polymerization reaction, and both carry out as competing reactions. As a specific example thereof, biodiesel obtained by methyl esterification of rapeseed oil was added at 20% by volume to European market diesel fuel oil (European Standard EN590 conformance), sludge was distilled by heating to 115°C, and the results of measuring the molecular weight distribution with a GPC apparatus provided with two "Shodex K2002" and one "Shodex K2003", for performing detailed analysis on the sludge composition for this sludge, are shown in FIG. 2. It can be understood that high viscosity oxides and the like having a mass average molecular weight in the range of 300 to 1800 are generated, as shown in FIG. 2. These products are insoluble in the paraffin component, and thus these products become a cause of sludge formation.

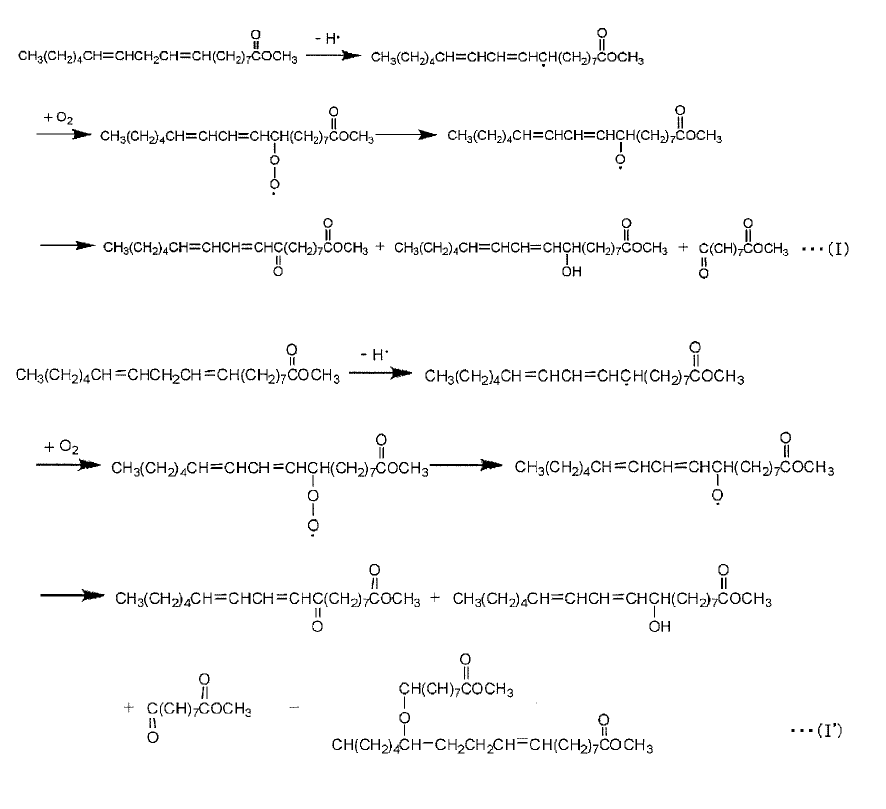

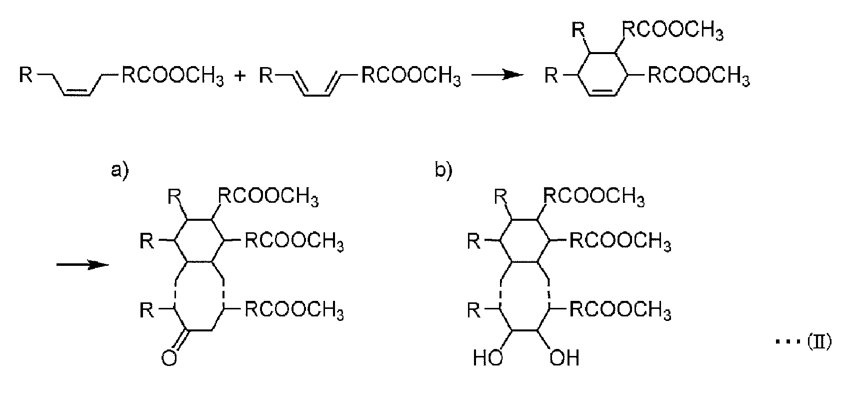

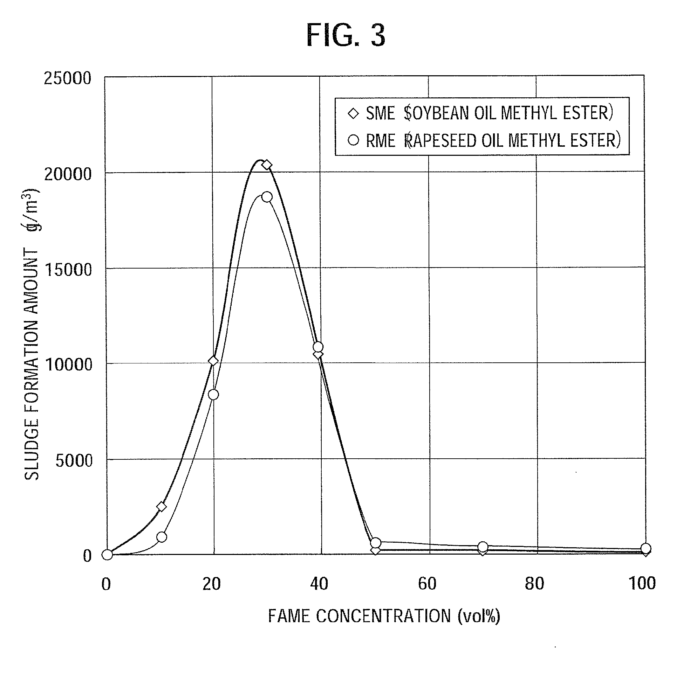

Herein, the ASTM D2274 oxidation stability test and oxidation stability tests regulated by enforcement standards in Japan (law enforced regulations relating to quality guarantee of petroleum, etc. (Ordinance of the Ministry of Economy, Trade and Industry No. 3 2007)) were applied (the details thereof are described below), and the results of examining the relationship between additive amount of biodiesel and sludge formation amount are shown in FIG. 3.

As shown in FIG. 3, normally, when the additive amount of biodiesel added into the diesel fuel oil is set to within the range 10% by volume to 50% by volume, a large amount of sludge forms. In particular, at the maximum point of the sludge formation amount, the sludge formation amount increases from a hundred to several hundreds by a 100 times compared to a case of not containing biodiesel. When considering the fuel temperature circulating near the common-rail injectors or backflow, the potential for sludge formation further increases in actual equipment.

Contrary to this, in the diesel fuel composition of the present invention, even if the additive amount of biodiesel is within the range of 10% by volume to 50% by volume, it is possible to greatly reduce the formation amount of sludge by adjusting the content percentage of aromatic component and paraffin component in the diesel fuel oil. In addition, even in the case of using biodiesel composed of FAME having a large proportion of double bonds (e.g., soybean oil methyl ester), the formation amount of sludge can be greatly reduced.

### Other Components

Special additives can be added and used together in the diesel fuel composition of the present invention. For example, an antioxidant such as BHT can be exemplified as an additive. It is possible to further reduce the formation of sludge by using such an additive in combination.

### EXAMPLES

Next, the present invention will be explained in further detail based on Examples; however, the present invention is not to be limited thereto.

### Investigation of Content Percentage of Aromatic Component and Paraffin Component

Using tetralin (manufactured by Wako Pure Chemical Industries, Ltd., grade 1 tetralin) as a substitute for the aromatic component, and using cetane (manufactured by Kanto Koatsu Kagaku Co., Ltd., reference fuel cetane) as a substitute for the paraffin component, an artificial diesel fuel oil was prepared in which the tetralin and cetane were blended at predetermined proportions. Methyl linoleate or methyl linolenic acid were respectively added to the artificial diesel fuel oil thus prepared (B20 only methyl oleate was also added), and a diesel fuel compositions having an added concentration of these fatty acid methyls of 10% by volume, 20% by volume and 30% by volume were produced.

Herein, the three main components of naphthene component, paraffin component, and aromatic component are in the following relationship with the formation of sludge. The aromatic component exhibits an effect to dissolve and disperse sludge so that the sludge solubility is high. On the other hand, the naphthene component and paraffin component cause the formation amount of sludge to increase so that the sludge solubility is low. Since the paraffin component causes the sludge solubility to be lower than the naphthene component, in the Example of the present invention, in order to verify the effects on a base diesel fuel oil in which the composition of the main components is diverse, an artificial diesel fuel oil in which naphthene had been substituted by paraffin, which has a lower sludge solvency, was used. Therefore, even in the case of using a diesel fuel oil containing naphthene as the base diesel fuel oil of the present invention, it is possible to achieve the above effects equal to the artificial diesel fuel oil of the Example.

For the diesel fuel composition described above, the sludge formation amount was investigated applying the ASTM D2274 oxidation stability test and oxidation stability tests regulated by enforcement standards in Japan (law enforced regulations relating to quality guarantee of petroleum, etc.

(Ordinance of the Ministry of Economy, Trade and Industry No. 3 2007)). More specifically, for each of the diesel fuel compositions thus prepared, dead-end filtration was performed using a PTFE filter (manufactured by Touyou Seishi Co.), after which the diesel fuel composition was caused to degrade under an oxidizing atmosphere over 16 hours at 115°C. The diesel fuel composition thus caused to degrade with heat over 5 hours was cooled to around 0°C in ice water (approximately 0°C), after which the supernatant portion of the diesel fuel composition was extracted by filtration using a PTFE filter. The sludge trapped in the PTFE filter was washed with octane and dried, and then the weight thereof was measured.

Meanwhile, after extracting the supernatant portion, the insoluble component having adhesion was washed with an organic solvent, the sludge was extracted by drying with an existent gum tester (manufactured by Rigo Co., Ltd.), and the weight thereof was measured.

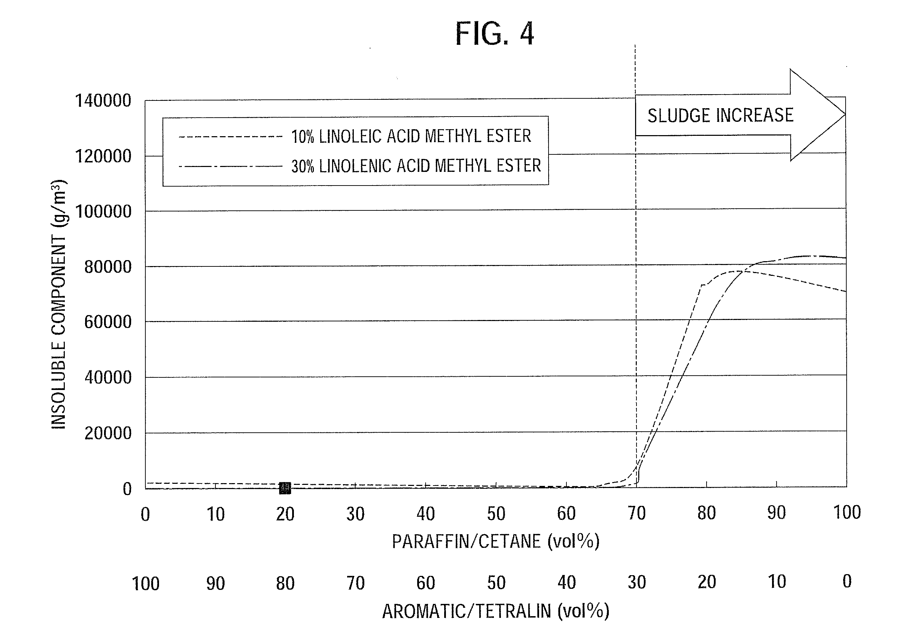

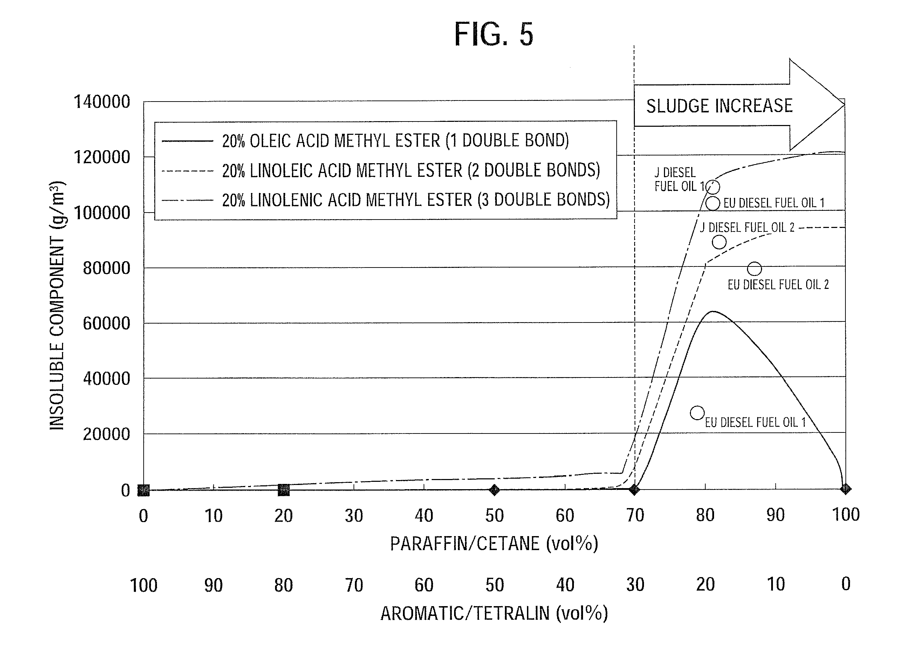

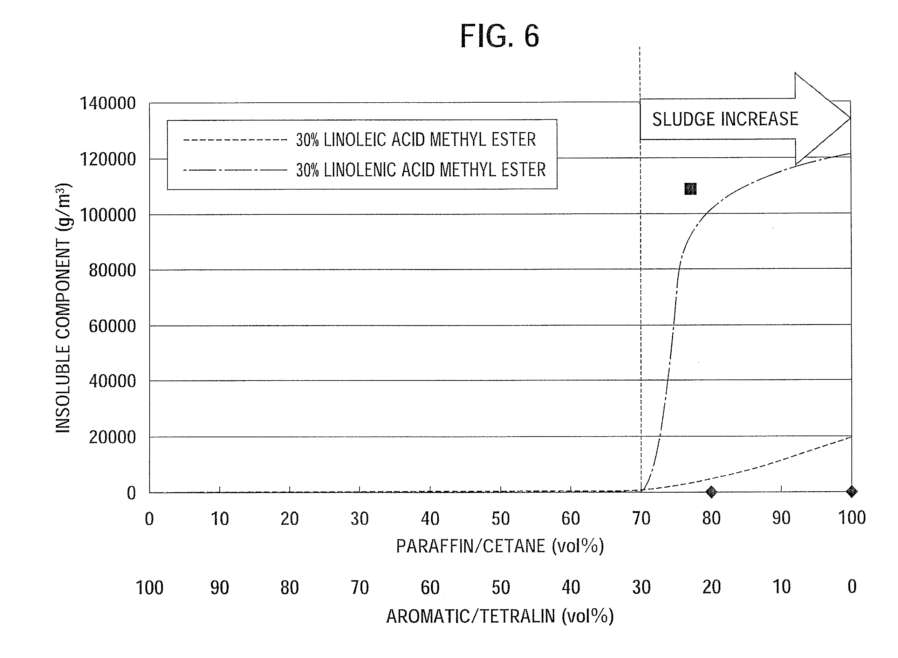

The concentration of sludge (g/m³) in the diesel fuel composition was sought from the sum total of weights of these sludges. The changes in sludge formation amount when the content ratios of tetralin and cetane of the artificial diesel fuel oils were changed are shown in FIGs. 4 to 6. In FIG. 5, although a case in which the fatty acid methyl ester added concentration was 20% by volume is shown, in addition to the artificial diesel fuel oil, the sludge formation amount was plotted using commercially available diesel fuel oil for which the aromatic amount was measured by IP391 as a comparison.

As shown in FIGs. 4 to 6, in the case in which the added concentration of fatty acid methyl is 10% by volume to 50% by volume, when the content percentage of tetralin in the artificial diesel fuel oil is at least 30% by volume, i.e. the content percentage of the paraffin component is no more than 70% by volume, it is understood that the sludge formation amount can be greatly suppressed. From this result, it has been confirmed that the formation of sludge can be greatly reduced according to the diesel fuel composition of the present invention, even if the additive amount of biodiesel is within the range of 10% by volume to 50% by volume.

### Investigation of Biodiesel

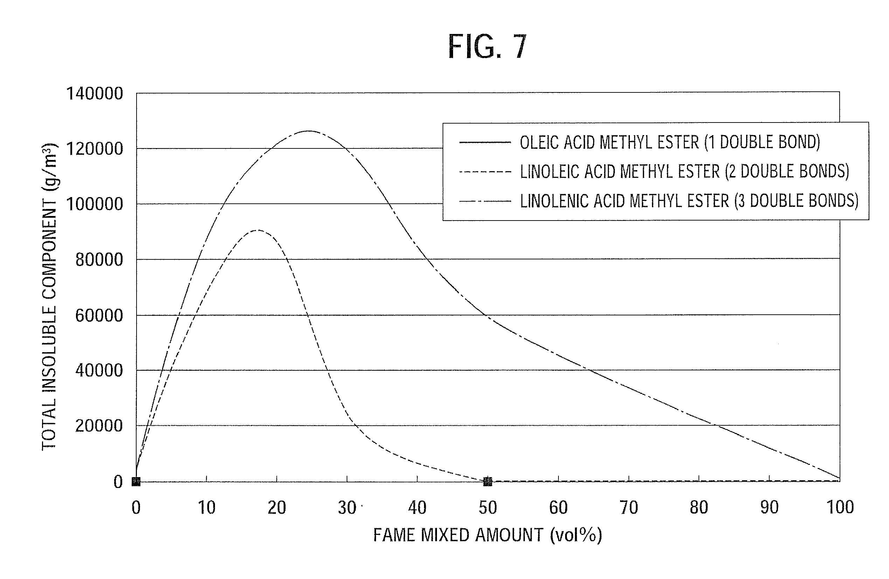

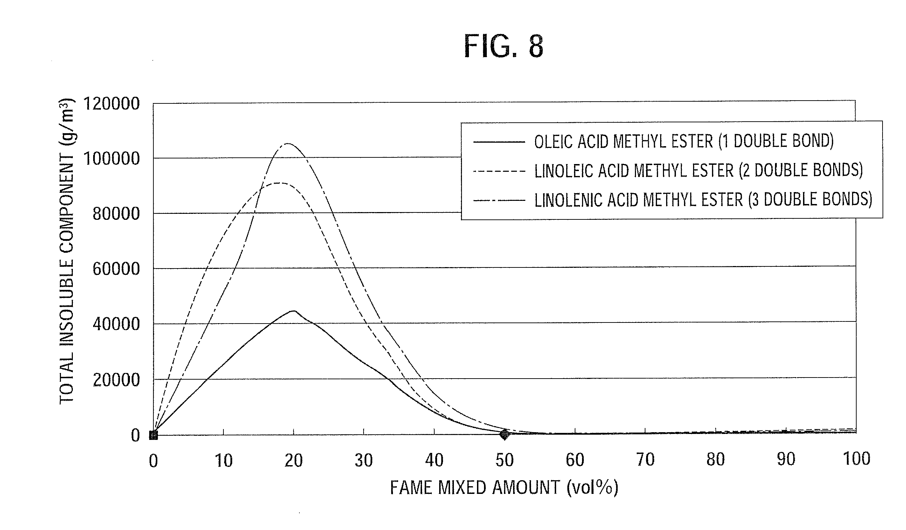

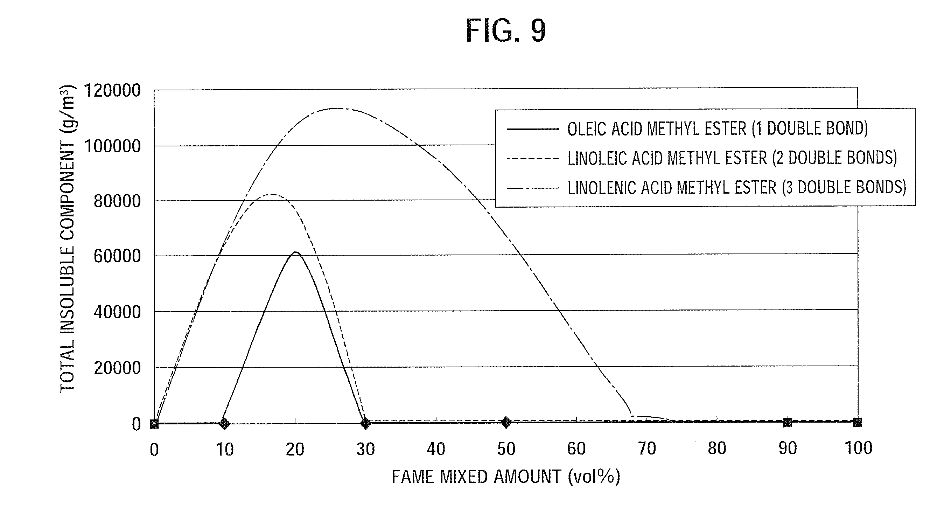

Investigation was carried out for a variety of FAME that can be used as the biodiesel of the present invention. Similarly to the above-mentioned Example, using tetralin (manufactured by Wako Pure Chemical Industries, Ltd., grade 1 tetralin) as a substitute for the aromatic component, and using cetane (manufactured by Kanto Koatsu Kagaku Co., Ltd., reference fuel cetane) as a substitute for the paraffin component, artificial diesel fuel oils having a concentration of cetane of 100% by volume, 90% by volume, and 80% by volume were produced. Diesel fuel compositions in which methyl oleate, methyl linoleate, or methyl linolenic acid had been respectively added to this artificial diesel fuel oil were produced. For each of the diesel fuel compositions thus produced, measurement of the sludge formation amount was carried out with a method similar to that in the above-mentioned Example. The results thereof are shown in FIGs. 7 to 9.

It could be understood that, as shown in FIGs. 7 to 9, even in the artificial diesel fuel oils having any of a cetane concentration of 100% by volume, 90% by volume, or 80% by volume, the formation amount of sludge was reduced when using methyl oleate having a small proportion of double bonds as the biodiesel, whereas the formation amount of sludge was large when methyl linolenic acid having many double bonds was used as the biodiesel. As a result, it was understood that the effects of the present invention could be better exhibited in the case of using a biodiesel obtained by methyl esterification of vegetal oil containing many double bonds and having a high iodine value.

From the above results, it has been confirmed that, in a diesel fuel composition made by mixing diesel fuel oil and biodiesel, it is possible to markedly suppress the formation of sludge compared to conventionally by setting the content percentage of biodiesel to 10% by volume to 50% by volume and setting the content percentage of the aromatic component in diesel fuel oil to at least 30% by volume.

## Claims

1. A diesel fuel composition made by mixing diesel fuel oil containing an aromatic component with biodiesel,
wherein a content percentage of the biodiesel in the diesel fuel composition is 10% by volume to 50% by volume, and
wherein a content percentage of the aromatic component in the diesel fuel oil is at least 30% by volume.

2. The diesel fuel composition according to claim 1, wherein the biodiesel is a biodiesel obtained by methyl esterification of vegetal oil having an iodine value of 50 to 200.

3. The diesel fuel composition according to claim 2, wherein the vegetal oil is at least one selected from the group consisting of linseed oil, safflower oil, high oleic safflower oil, soybean oil, sesame oil, corn oil, rapeseed oil, cottonseed oil, olive oil, palm oil, sunflower oil, and jatropha oil.
